# EUROPEAN PATENT APPLICATION

(11) **EP 3 396 340 A1**
(43) Date of publication of application: **31.10.2018**
(21) Application number: 16879276.0
(22) Date of filing: 19.12.2016
(51) Int. Cl.: G01K 7/18, G01K 7/21, H01C 17/28, H01C 17/06, H01C 17/22, H01C 17/24

(54) **TEMPERATURE SENSOR**

(30) Priority: 24.12.2015 KR 20150186669; 31.05.2016 KR 20160067579
(71) Applicant: Moda-Innochips Co., Ltd., Danwon-gu, Ansan-si Gyeonggi-do 15433 (KR)
(72) Inventor: JUNG, Jun Ho, Siheung-si Gyeonggi-do 14921 (KR); KIM, Soo Chan, Siheung-si Gyeonggi-do 15063 (KR)
(74) Representative: Michalski Hüttermann & Partner Patentanwälte mbB
(86) International application number: PCT/KR2016/014869
(87) International publication number: WO 2017/111409

(57) **Abstract**

The present invention discloses a temperature sensor including a main body in which a resistance part is provided, a lead wire bonded to the main body, and an accommodation part having a predetermined depth in a bonded area between the main body and the lead wire to accommodate the lead wire so as to come into contact with the lead wire.

## Description

### TECHNICAL FIELD

The present invention relates to a temperature sensor, and more particularly, to a temperature sensor that includes a resistance layer to measure a high temperature.

### BACKGROUND ART

Temperature sensors are sensors for detecting an internal resistance value due to a change in temperature or detecting a change in voltage or current to measure a temperature. Such a temperature sensor includes a thermistor using a characteristic in which an internal resistance value decreases according to a temperature, a platinum temperature sensor using a characteristic in which proportional resistance of platinum increases according to a temperature, a thermocouple temperature sensor using a principle in which a voltage is generated when heat is applied to objects different from each other, and the like.

Among them, the platinum temperature sensor, which has a high melting point of 1,786°C, is chemically and electrically stable, has excellent elasticity, and a resistance temperature characteristic that is close to a straight line is being widely used. Also, the platinum temperature sensor is stable in characteristic and has a wide measurement temperature range from -200°C to 1000°C. The platinum temperature sensor may be used for measuring an engine temperature, a gear box temperature, a gas temperature, an operating environment temperature of a device, and the like. In addition, the platinum temperature sensor may be used for detecting and controlling a high temperature for electric furnaces, smelting, blast furnaces, and the like.

The platinum temperature sensor has a structure including a resistance layer formed on a substrate by using a platinum pattern, a cover layer formed on the resistance layer to protect the platinum resistance layer, a cover layer, a lead wire, and a wire cover. Here, the cover layer and the cover may be made of a glass material for a high temperature. Such a platinum temperature sensor is disclosed in German Patent Publication No. DE199901183, Japanese Patent Publication No. 55-166903, and U.S Patent Registration No. 4,234,542. Also, a platinum temperature sensor is disclosed in Korean Patent Publication Nos. 1995-0014873 and 1999-0080913.

However, in most platinum temperature sensors, a photolithography process is performed after a platinum thin film is deposited to form a resistance layer. That is, after the platinum thin film is formed, a photoresist layer is formed on the platinum thin film. Then, photolithography and development processes using a predetermined mask are performed on the photoresist layer to pattern the photoresist layer, and then, the platinum thin film is etched by using the patterned photoresist layer as an etch mask to form a resistance layer. Since the resistance layer is formed through the thin film deposition process, the photolithography and development processes, and the etching process, the manufacturing process may be complicated, and thus, costs for equipments used for performing the processes increase.

Also, a lead wire is disposed on a pad to connect the lead wire, and then laser is irradiated to bond the lead wire. However, since the lead wire has a circular shape in cross-section and comes into contact with the flat pad, a contact area between the lead wire and the pad decreases. Thus, the bonding force may be reduced to cause a problem in which the lead wire is separated from the pad.

### (PRIOR ART DOCUMENTS)

German Patent Publication No. DE199901183
Japanese Patent Publication No. 55-166903
U.S Patent Registration No. 4,234,542
Korean Patent Publication No. 1995-0014873
Korean Patent Publication No. 1995-0080913

### DISCLOSURE OF THE INVENTION

### TECHNICAL PROBLEM

The present invention provides a temperature sensor that is capable of reducing manufacturing costs.

The present invention provides a temperature sensor that is capable of improving bonding force between a main body and a lead wire.

### TECHNICAL SOLUTION

A temperature sensor according to one aspect of the present invention includes: a main body in which a resistance part is provided; a lead wire bonded to the main body; and an accommodation part having a predetermined depth in a bonded area between the main body and the lead wire to accommodate the lead wire so as to come into contact with the lead wire.

The lead wire may have an end that is spread.

An insertion hole may be defined in at least a portion of the accommodation part, and an end of the lead wire may be bent to be inserted into the insertion hole.

The main body may include: a plurality of laminated insulation layers; the resistance part disposed on at least one of the insulation layers; and a resistance trimming part disposed on the at least one insulation layer above the resistance part to trim entire resistance.

The resistance part may include at least one resistance layer disposed on at least one insulation layer so that the resistance layers are connected to each other through at least one first opening filled with a conductive material, and the resistance trimming part may include at least one trimming pattern and at least one second opening filled with a conductive material and is connected to at least one resistance layer of the resistance layers through the second opening, wherein the at least one trimming pattern may be cut to trim the resistance.

The temperature sensor may further include a resistance adjustment part disposed on the insulation layer to connect the resistance part to the resistance trimming part and thereby to adjust the resistance.

The resistance adjustment part may include at least one dummy pattern and at least one contact area so that the dummy pattern is connected to the trimming pattern through the contact area and the second opening.

Photosensitive paste containing platinum may be provided on an insulation layer and patterned through exposure and development processes to form the resistance part.

In the photosensitive paste containing the platinum, the platinum and an organic material containing a photosensitive material may have a ratio of 50:50 to 90:10.

Photosensitive paste containing platinum may be provided on the insulation layer and patterned through exposure and development processes to form at least one of the dummy pattern and the trimming pattern.

The temperature sensor may further include a cover disposed to cover the main body and a wire cover disposed to cover the lead wire.

The temperature sensor may further include a first cover disposed on the main body to expose at least a portion of the main body and a second cover disposed to cover the first cover.

A temperature sensor according to another aspect of the present invention includes: a plurality of laminated insulation layers; a resistance part disposed on at least one of the insulation layers; a resistance trimming part disposed on the at least one insulation layer above the resistance part and connected to the resistance part to trim resistance; a first cover disposed on the resistance trimming part to expose at least a portion of the resistance trimming part; and a second cover disposed on the first cover.

The temperature sensor may further include an accommodation part provided in a predetermined area of the first cover and a lead wire accommodated in the accommodation part.

The resistance part may include at least one resistance layer disposed on at least one insulation layer so that the resistance layers are connected to each other through at least one first opening filled with a conductive material, and the resistance trimming part may include at least one trimming pattern and at least one second opening filled with a conductive material and is connected to at least one resistance layer of the resistance layers through the second opening, wherein the at least one trimming pattern is cut to trim the resistance.

The temperature sensor may further include a resistance adjustment part disposed on the insulation layer to connect the resistance part to the resistance trimming part and thereby to adjust the resistance.

The resistance adjustment part may include at least one dummy pattern and at least one contact area so that the dummy pattern is connected to the trimming pattern through the contact area and the second opening.

The second cover may be disposed to be buried into an exposure part and the accommodation part of the first cover.

The first cover may be made of the same material as each of the plurality of insulation layers, and the second cover may be made of a material different from that of each of the plurality of insulation layers.

Each of the plurality of insulation layers and the first cover may be made of a material including Al₂O₃.

The second cover may be made of a material including glass.

Laser may be irradiated onto at least a portion of the resistance trimming layer exposed by the first cover to adjust resistance.

The first cover may have a thickness greater than that of each of the plurality of insulation layers and equal to or different from that of the plurality of laminated insulation layers.

The second cover may have a thickness equal to or different from that of the first cover.

### ADVANTAGEOUS EFFECTS

According to the embodiments of the present invention, the accommodation part accommodating the lead wire may be formed in the predetermined region of the main body to accommodate the lead wire into the accommodation part and thereby to increase in contact area between the main body and the lead wire, thereby improving the bonding force between the main body and the lead wire. Also, the end of the lead wire may be pushed and spread to more increase in bonding area between the main body and the lead wire.

Also, according to the embodiments of the present invention, the photosensitive paste containing platinum may be applied, and then, the exposure and development processes may be performed to the resistance layer. Thus, the line width and the distance of the resistance layer may be reduced to increase in length of the resistance layer within the same area, and also, the number of manufacturing processes may decrease to reduce the manufacturing costs.

Also, the resistance adjustment part may be formed to be connected to the resistance layer, and the resistance trimming part may be formed to be connected to the resistance adjustment part. Then, the laser may be irradiated onto the resistance trimming part according to the measured resistance to disconnect the parallel connection line connected to the resistance adjustment part, thereby adjusting the resistance even after the manufacturing process is completed.

Also, the plurality of insulation layers on which the resistance layer and the resistance trimming layer are formed and the first cover layer exposing the resistance trimming layer may be made of the same material, and the second cover made of the different material may be formed on the first cover layer to reduce the number of processes, thereby reducing the manufacturing costs.

### BRIEF DESCRIPTION OF THE DRAWINGS

FIGS. 1 and 2 are a perspective view and an exploded perspective view of a temperature sensor according to a first embodiment of the present invention.
FIG. 3 is a partial enlarged view of the temperature sensor according to the first embodiment of the present invention.
FIGS. 4 and 5 are a perspective view and an exploded perspective view of a temperature sensor according to a second embodiment of the present invention.
FIG. 6 and 7 are perspective views of a temperature sensor according to third and fourth embodiments of the present invention.
FIGS. 8 and 9 are perspective views of a temperature sensor according to fifth and sixth embodiments of the present invention.
FIGS. 10 and 11 are an exploded perspective view and a partial enlarged view of a temperature sensor according to a seventh embodiment of the present invention.
FIG. 12 is an exploded perspective view and a partial enlarged view of a temperature sensor according to an eighth embodiment of the present invention.
FIGS. 13 to 15 are an exploded perspective view and a partial enlarged view of a temperature sensor according to ninth to eleventh embodiments of the present invention.

### MODE FOR CARRYING OUT THE INVENTION

Hereinafter, embodiments of the present invention will be described in detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

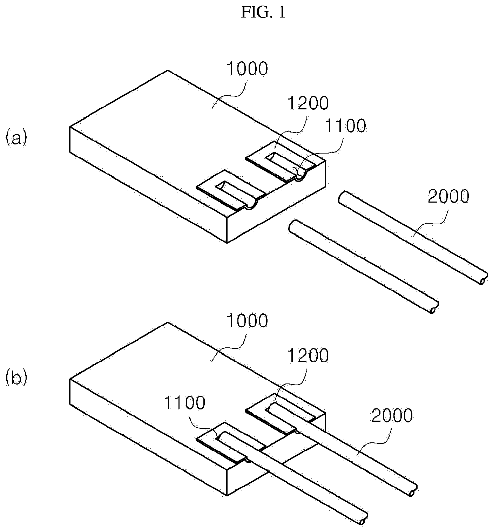

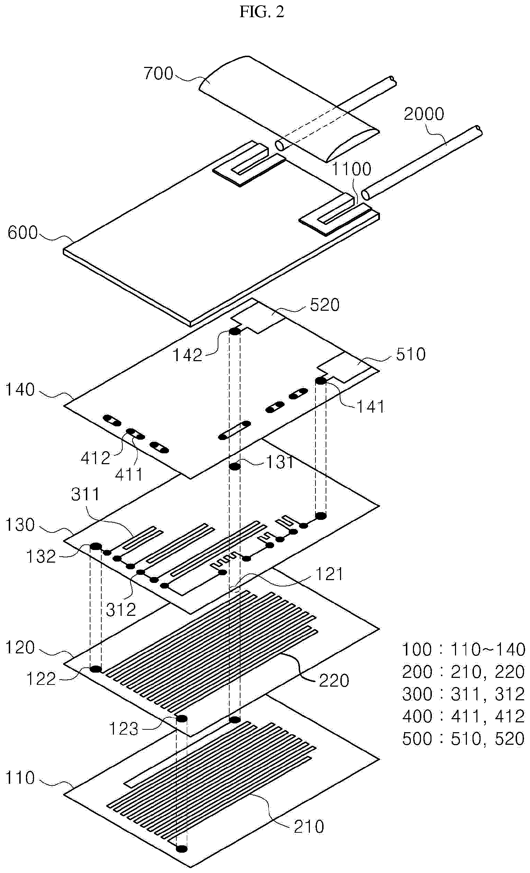

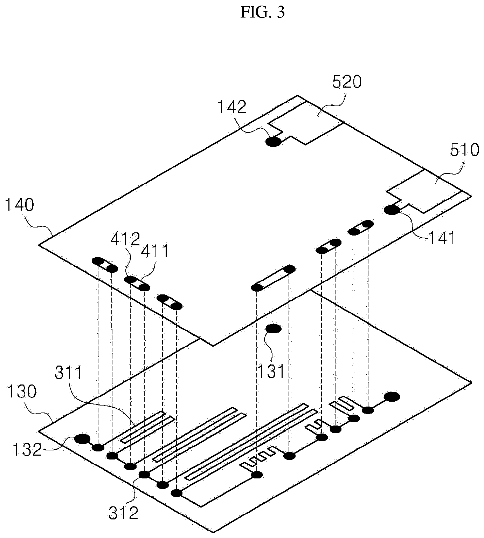

FIGS. 1 and 2 are a perspective view and an exploded perspective view of a temperature sensor according to a first embodiment of the present invention, and FIG. 2 is an exploded perspective view of the temperature sensor according to the first embodiment of the present invention. Also, FIG. 3 is a partial enlarged view of the temperature sensor according to the first embodiment of the present invention.

Referring to FIG. 1, the temperature sensor according to the first embodiment of the present invention may include a main body 1000 and a lead wire 2000 coming into contact with one area of the main body 1000. Here, as illustrated in FIG. 2, the main body 1000 may include a plurality of insulation layer 100, at least one resistance part 200 disposed on at least one insulation layer 100, at least one resistance adjustment part 300 disposed on at least one insulation layer above the resistance part 200, and at least one resistance trimming part 400 disposed on at least one insulation layer above the resistance adjustment part 300.

For example, the main body 1000 may have a rectangular parallelepiped shape. That is, the main body 1000 may have a rectangular shape in one direction and the other direction perpendicular to the one direction and also have a predetermined thickness. The lead wire 2000 may be received in one region of the main body 1000, and an accommodation part 1100 connected to the lead wire 2000 may be defined in the one region of the main body 1000. For example, the accommodation part 1100 having a predetermined width may be defined in a predetermined region of one short side of the main body 1000. Here, the accommodation part 1100 may be provided in number corresponding to the number of lead wires 2000. For example, two accommodation parts 1100 spaced a predetermined distance from each other may be provided. Also, the accommodation part 1100 according to an embodiment of the present invention may have a recessed shape having a portion stepped downward from a top surface of the main body 1000. The accommodation part 1100 may have a width, for example, corresponding to a diameter of the lead wire 2000 so that the lead wire 2000 is inserted into the accommodation part 1100. That is, a width of the accommodation part 1100 in a horizontal direction may correspond to a diameter of the lead wire 2000. The accommodation part 1100 may have a width greater or less than the diameter of the lead wire. That is, since the lead wire 2000 is easily inserted into the accommodation part 1100 as the accommodation part 1100 increases in width, the accommodation part 1100 may have a width greater than the diameter of the lead wire 2000. However, even though only a portion of the lead wire 2000 is inserted into the accommodation part 1100, a contact area of the lead wire 2000 may increase when compared to the related art. Thus, the accommodation part 1100 may have a width less than the diameter of the lead wire 2000. Also, the accommodation part 1100 may have a depth so that at least a portion of the lead wire 200 is inserted. For example, the accommodation part 1100 may have a depth so that about 1/2 of the diameter of the lead wire 2000 is inserted, for example, have a depth of 10 *µ*m to 300 *µ*m. Alternatively, the lead wire 2000 may be completely inserted into the accommodation part 1100, and thus, the lead wire 2000 and the surface of the main body 1000 have the same plane. As a result, the lead wire 200 may not protrude to the surface of the main body 1000. However, in this case, the accommodation part 110 may have a deep depth according to the diameter of the lead wire 2000. Thus, the main body 1000 may have a thicker thickness to provide the depth of the accommodation part 1100. Since the lead wire 2000 is inserted into the accommodation part 1100 provided in the main body 1000, the contact area between the accommodation part 1100 and the lead wire 2000 may increase to prevent the lead wire 2000 from being separated. That is, according to the related art, since the lead wire 2000 having a circular shape comes into contact with a plane of the main body 1000, the lead wire 200 may come into linear contact with the main body 1000, and thus, the contact area between the lead wire 2000 and the main body 1000 decrease. However, according to the present invention, since the accommodation part 1100 having the recessed shape may be provided in the main body 1000, and the lead wire 2000 is accommodated into the accommodation part 1100, the lead wire may come into surface contact with the accommodation part 2000, and thus, the contact area between the lead wire 2000 and the accommodation part 1100 may increase. An external pad 1200 may be disposed on at least a portion of the main body 1000 in addition to the accommodation part 1100. That is, the external pad 1200 may be disposed only inside the accommodation part 1100 and have a predetermined area on the main body 1000 in addition to the inside of the accommodation part 1100. Here, it is preferable that the external pad 1200 does not come into contact with the adjacent external pad 1200. That is, this is done because the lead wires 2000 are shortcircuited with each other when the two external pads 1200 adjacent to each other come into contact with each other. Thus, since the external pad 1200 is provided, the bonding through the welding to the lead wire 2000 may be easily performed to improve a process margin.

The lead wire 2000 may be provided in an approximately circular shape in cross-section with a predetermined diameter. Also, the lead wire 2000 may be made of a conductive material such as a metal. One end of the lead wire 2000 is accommodated into the accommodation part 1100 of the main body 1000 and bonded to the external pad 1200 through welding or the like. The lead wire 2000 may be disposed between the sensor instrument and the temperature sensor to connect the sensor instrument to the temperature sensor.

The temperature sensor according to an embodiment of the present invention will be described in more detail with reference to FIGS. 2 and 3.

As illustrated in FIGS. 2 and 3, the temperature sensor may include the plurality of laminated insulation layers 100 (110 to 140), the resistance part 200 disposed on at least one insulation layer 110 and 120, the resistance adjustment part 300 disposed on at least one insulation layer 130 above the resistance part 200, the resistance trimming part 400 disposed on at least one insulation layer 140 above the resistance adjustment part 300, and the cover 600 disposed on the resistance trimming part 400. Also, the temperature sensor may further include a wire cover 700 disposed on the cover 600 and also may further include a lower cover (not shown) disposed below the uppermost insulation layer 110. Here, each of the resistance part 200, the resistance adjustment part 300, and the resistance trimming part 400 may be disposed on the at least one insulation layer 100. According to a first embodiment of the present invention, the resistance part 200 may be disposed on each of the first and second insulation layers 110 and 120, the resistance adjustment part 300 may be disposed on the third insulation layer 130, and the resistance trimming part 400 may be disposed on the fourth insulation layer 140.

Each of the plurality of insulation layers 100 (110 to 140) may have, for example, a rectangular plate shape with a predetermined thickness. For example, each of the plurality of insulation layers 100 may have a predetermined thickness, and a ratio of lengths of a long side and a short side of the insulation layer 100 may be 5:1 to 5:4. Also, all the plurality of insulation layers 100 may have the same thickness. However, the plurality of insulation layers 100 may have thicknesses different from each other. For example, each of the first and second insulation layers 110 and 120 on which the resistance parts 200 are respectivley disposed may have a thickness greater than or less than that of the third insulation layer 130 on which the resistance adjustment part 300 is disposed. Each of the plurality of insulation layers 100 may be made of a ceramic material. For example, each of the insulation layers 100 may be made of Al₂O₃ or formed by mixing a mixture of a plurality of ceramic materials containing Al₂O₃. Particularly, each of the plurality of insulation layers 100 may be formed by mixing Al₂O₃ with ceramic materials such as MgO, ZrO2, and the like. Also, each of the insulation layers 100 may be formed by mixing B2O3-SiO2-based glass, Al₂O₃-SiO₂-based glass, or other ceramic materials with a composition containing Al₂O₃, glass frit, and the like. As a method for forming the plurality of insulation layers 100, a raw material containing Al₂O₃ may be ball-milled with a solvent such as alcohol to prepare raw material powder. Then, the raw material powder and an organic binder as addition agents may be dissolved and put in a toluene/alcohol-based solvent and then milled by using a ball mill and mixed to prepare slurry. Thereafter, a plate having a desired thickness may be manufactured by using the slurry through a method using a doctor blade or the like.

The resistance part 200 may be disposed on at least one insulation layer 100. For example, the first and second resistance layers 210 and 220 may be disposed on the first and second insulation layers 110 and 120, respectively. The resistance part 200 may be made of a conductive material, for example, platinum. Also, the resistance part 200 may have a predetermined curved portion. For example, the resistance part 200 may be linearly disposed from a predetermined area along the long side and then covered along the short side. Then, the resistance part 200 may be linearly disposed along the long side and then covered along the short side. Thus, the resistance part 200 may have a predetermined length on the insulation layer 100. Here, the first and second resistance layers 210 and 220 of the resistance part 200 may not be disposed on an area that overlaps internal pads 510 and 520 or may extend up to the area that overlaps the internal pads 510 and 520. Also, the first and second resistance layers 210 and 220 may have the same length on the first and second insulation layers 110 and 120, respectively. However, the first and second resistance layers 210 and 220 may be have lengths different from each other on the first and second layers 110 and 120, respectively. Since the more the resistance part 200 increases in length, the more resistance increases, the resistance part 200 may be adjusted in length so as to have desired resistance. That is, the resistance may be adjusted according to the sum of lengths of the first and second resistance layers 210 and 220. Thus, the first and second resistance layers 210 and 220 may have the same length or have lengths different from each other. Also, the resistance part 200 may have a predetermined width and distance. For example, the width and the distance of the resistance part 200 may be the same. However, the resistance part 200 may be adjusted in thickness, line width, and distance according to the entire resistance of the resistance part 200. The resistance part 200 may be disposed on the insulation layer 100 with an area corresponding to 10% to 90% of that of the insulation layer 100. Also, the first and second resistance layers 210 and 220 may be connected to each other through openings defined in the first and second resistance layers 110 and 120. That is, the first resistance layer 210 disposed on the first insulation layer 110 may be connected to the second resistance layer 220 through the opening 123 defined in the second insulation layer 120. Here, the opening 123 may pass through the second insulation layer 120 and be filled with, for example, platinum. Thus, the first and second resistance layers 210 and 220 respectively disposed on the first and second insulation layers 110 and 120 may be connected to each other. Thus, the resistance part 200 may be adjusted in length and area and thus be adjusted in resistance. Also, the resistance part 200 may be connected to the internal pad 500. Here, the first resistance layer 210 may be connected to the internal pad 500. That is, one of the internal pads 500, for example, the second internal pad 520 may extend by a predetermined width and then be connected to the first resistance layer 210 through an opening 142 defined in the fourth insulation layer 140 and openings 132 and 121, which are respectivley defined in the third insulation layer 130 and the second insulation layer 120. Here, the openings 142, 131, and 121 may pass through the insulation layer 100 and be filled with a conductive material. That is, each of the openings 121, 122, 123, 131, 132, 141, 142 connecting the resistance part 220 to the internal pad 500 may be filled with a conductive material, For example, the resistance part 200 may be formed by applying photosensitive paste containing platinum through a screen printing method and then patterning the applied photosensitive paste through exposure and development processes. That is, the photosensitive paste containing platinum may be applied to the insulation layer 100 and then patterned through the photolithography and development processes using a predetermined mask to form the patterned photosensitive paste containing platinum. Also, an organic material containing the photosensitive material may be removed in a sintering process to form the resistance part 200, which is provided as a platinum layer having a predetermined pattern on the insulation layers 110, 120, and 130. Here, in the photosensitive paste containing platinum, the platinum and the organic material containing the photosensitive material may be mixed at a ratio of 50:50 to 90:10. Here, the ratio may be a unit of wt%. When a rate of platinum is less than 50, the pattern of the resistance layer may be broken without being connected. When a rate of platinum exceeds 90, it is not easy to perform the photolithography and development processes. Since the resistance part 200 is formed by using the photosensitive paste containing platinum, the resistance part 200 may have a fine line width and distance while having a thick thickness. For example, the resistance part 200 may have a thickness of 1 *µ*m to 5 *µ*m after the sintering process and a line width and distance of 5 *µ*m to 50 *µ*m after the sintering process. Thus, each of the first and second resistance layers 210 and 220 may have, for example, resistance of 200 Ω. Alternatively, each of the first and second resistance layers 210 and 220 may have various resistance according to the length, thickness, line width, and distance thereof. Also, since the resistance part 200 is formed by using the photosensitive paste containing platinum, the number of processes may be reduced, and thus, manufacturing costs may be reduced when compared to the related art. That is, according to the related art, the platinum thin film is formed, and a photoresist layer is formed on the platinum thin film. Then, the photoresist layer is patterned through the photolithography and development processes using a predetermined mask, and the platinum thin film is etched by using the patterned photoresist layer as an etch mask to form the resistance layer. Since the thin film deposition and the photolithography process are performed, the manufacturing process may be complicated, and much costs for equipment may be required. According to the present invention, the thin film formation process and the photoresist layer formation process may be reduced into one process, and the separate etching process may not be performed to reduce the number of processes.

The resistance adjustment part 300 may be provided to finely adjust resistance of the temperature sensor, and at least one insulation layer 110 may be disposed on the resistance part 200. For example, as illustrated in FIG. 2, the resistance adjustment part 300 may be disposed on the third insulation layer 130. Alternatively, the other resistance adjustment part 300 may be disposed on the third insulation layer 130 and be connected to the resistance adjustment part 300 disposed on the third insulation layer 130. The resistance adjustment part 300 may be provided to adjust the entire resistance of the temperature sensor. That is, at least one resistance part 200 may have a predetermined pattern to fix the resistance, and the resistance adjustment part 300 may be electrically connected to the resistance part 200 to adjust the entire resistance of the temperature sensor. For this, the resistance adjustment part 300 may include a plurality of contact areas 312 provided on the third insulation layer 130 and a plurality of dummy patterns 311. That is, in the resistance adjustment part 300, the plurality of dummy patterns 311 may be connected to at least one contact area 312 and then connected to the resistance trimming part 400, which is disposed thereabove, through the contact area 312. Here, the contact area 312 may have a width greater than that of each of the dummy patterns 311. Also, the resistance adjustment part 300 may be electrically connected to the second resistance layer 220, which is disposed therebelow, through the hole 132 filled with the conductive material. For example, the resistance adjustment part 300 disposed on the third insulation layer 130 may include the plurality of dummy patterns 311 and the plurality of contact areas 312 provided to correspond to a predetermined area of the resistance trimming part 400. That is, the plurality of contact areas 312 corresponding to the opening 412 of the upper resistance trimming part 400 may be spaced a predetermined distance from each other, and the dummy pattern may have a predetermined curved portion so as to be connected to the plurality of contact areas 312. Here, the plurality of dummy patterns 311 may have at least two lengths between the plurality of contact areas 312. For example, six contact areas 312 may be provided along the short side. That is, the dummy patterns 311 may have the predetermined curved portions between the first contact area and the second contact area, between the third contact area and the fourth contact area, and between the fifth contact area and the sixth contact area. Here, the dummy patterns 311 may have lengths that gradually increases from the first contact area to the sixth contact area. Here, the dummy patterns 311 may have linear shapes between the second contact area and third contact area and between the fourth contact area and the fifth contact area. Also, a plurality of contact areas 312 may be further disposed from the sixth contact area in a direction of the long side, and the dummy patterns may have different lengths between the sixth contact area and the long side. An opening 132 filled with the conductive material may be defined in one end of the dummy pattern and then connected to an end of the second resistance layer 220, which is disposed therebelow. Also, the other end of the dummy pattern 311 may have a width greater than that of the dummy pattern 311 so that the conductive material formed in the fourth insulation layer is connected to the first internal pad 510 through the opening 141. As described above, the resistance adjustment part 300 and a predetermined area of the resistance trimming part 400 may be electrically connected to each other to adjust an entire resistance value of the temperature sensor through laser trimming of the resistance trimming part 400. That is, when the resistance adjustment part 300 is connected to the trimming pattern 411 of the resistance trimming part 400, the resistance adjustment part 300 may be shorted in conductive path, and thus, the entire resistance of the temperature sensor may be reduced. On the other hand, when at least one trimming pattern 411 of the resistance trimming part 400 connected to the resistance adjustment part 300 is disconnected, the resistance adjustment part 300 may increase in conductive path, and thus, the entire resistance of the temperature sensor may increase. The resistance adjustment part 300 may be made of a conductive material, for example, photosensitive paste containing platinum. That is, the resistance adjustment part 300 may be formed through the same process as the resistance part 200.

The resistance trimming part 400 may be disposed above the resistance adjustment part 300. That is, the resistance trimming part 400 may be disposed on the fourth insulation layer 140 above the resistance adjustment part 300. The resistance trimming part 400 may include a plurality of openings 412, which of which is filled with a conductive material connected to a predetermined area of the resistance adjustment part 300, and a trimming pattern 411 formed to connect at least two openings 412 to each other. That is, the plurality of openings 412 may be defined to expose the resistance adjustment part 300, which is disposed therebelow, and filled with a conductive material to be connected to the resistance adjustment part 300. For example, the plurality of openings 412 may be defined to be connected to the plurality of contact areas 312 of the resistance adjustment part 300. That is to say, the plurality of openings 412 of the resistance trimming part 400 and the plurality of contact areas 312 of the resistance adjustment part 300 may be disposed at the same position. In addition, the plurality of openings 412 of the resistance trimming part 400 may expose predetermined areas of the plurality of dummy patterns 311, respectively. Also, the trimming pattern 411 may be disposed to connect two openings 412 adjacent to each other. Thus, one trimming pattern 411 may be connected to at least one dummy pattern 311 of the resistance adjustment part 300. Laser is irradiated onto the trimming pattern 411 of the resistance trimming part 400 to cut the trimming pattern 411, thereby adjusting the entire resistance of the temperature sensor. For example, although the resistance part 200 is connected to the resistance adjustment part 300 to set initial resistance to 300 Ω, if the initial resistance is actually measured to 299 Ω, laser may be irradiated onto at least one trimming pattern 411 of the resistance trimming part 400 to cut the trimming pattern 411 so that the electrical connection path of the resistance adjustment part 300 connected by the short path through the trimming pattern 411 of the resistance trimming part 400 is changed to be detoured to the electrical connection path connected by a longer path through the dummy pattern 311. Thus, the connection length of the resistance adjustment part 300 electrically connected to the resistance part 200 may increase by the cutting of the trimming pattern 411 of the resistance trimming part 400, and thus, the resistance may increase to mach the initial resistance, for example, 300 Ω. The resistance trimming part 400 may be formed by using the photosensitive paste containing the conductive material.

The internal pad 500 may be disposed on the fourth insulation layer 140. That is, the internal pad 500 may be spaced apart from the plurality of openings 412 that are used as the resistance trimming parts 400. The internal pad 500 may be provided in number corresponding to the number of lead wires 2000. For example, the internal pad 500 may include first and second internal pads 510 and 520. Each of the first and second internal pads 510 and 520 may have a predetermined size. For example, the internal pad 500 may be disposed on an area corresponding to that on which the first and second resistance layers 210 and 220 of the first and second insulation layers 110 and 120 are not disposed or may be disposed on an area corresponding to that on which the first and second resistance layers 210 and 220 are disposed. Also, the internal pad 500 may have an extension area that extends from each of the first and second internal pads 510 and 520 by a width less than that of each of the first and second internal pads 510 and 520. The openings 141 and 142 filled with the conductive material may be defined in ends of the extension areas, respectively. The openings 141 and 142 may be connected to at least one of the dummy pattern 311 and the resistance part 200 of the resistance adjustment layer 300, which is disposed therebelow. Also, the internal pad 500 may be connected to the external pad 1200 disposed in the accommodation part 1100. Alternatively, the internal pad 500 may be used as the external pad 1200. Thus, the internal pad 500 may be connected to the lead wire 200 inserted to be coupled to the accommodation part 1100.

The cover 600 may be disposed on the fourth insulation layer 140. The cover 600 may be provided to protect the resistance part 200, the resistance adjustment part 300, and the resistance trimming part 400, which are respectively disposed on the plurality of insulation layers 100. At least one area of the cover 600 may be removed to form the accommodation part 1100. That is, one area of the cover 600 may be removed to expose the internal pad 500, thereby forming the accommodation part 1100. Also, the external pad 1200 disposed on the accommodation part 1100 may be disposed on a side surface of the accommodation part 1100 or disposed on an upper portion of the accommodation part 1100 to come into contact with the internal pad 500 exposed by the accommodation part 1100. Here, the cover 600 may be provided after adjusting the entire resistance through the resistance trimming part 400 and the resistance adjustment part 300. That is, when the resistance is less than that set after measuring the resistance of the temperature sensor, laser may be irradiated onto at least one of the plurality of trimming patterns 411 of the resistance trimming part 400 to allow at least one dummy pattern 311 of the resistance adjustment part 300 to be connected by the longer path and thereby to adjust the resistance, thereby forming the cover 600. Here, the cover 600 may be made of the same material as the insulation layer 100 and have a thickness greater than that of each of the insulation layers 100. Also, the cover 600 may have at least double structure. That is, the cover 600 may include a first cover made of the same material as the insulation layer 100 and a second cover made of a glass material for a high temperature, which is laminated on the first cover. Here, the glass cover for the high temperature may be formed by printing glass paste or formed through the other process such as coating, dispensing, dipping, or the like. The accommodation part 1100 may be disposed in one area of the cover 600. That is, one area of the cover 600 may be removed to form the accommodation part 1100 exposing the internal pad 500, and the lead wire 2000 may be seated in the accommodation part 1100. The wire cover 700 may be disposed on the cover 600 to cover the lead wire 2000. The wire cover 700 may be disposed to cover at least the accommodation part 1100 or disposed to cover the external pad 1200. Here, the wire cover 700 may be made of a glass material for a high temperature.

According to the embodiments of the present invention, the accommodation part accommodating the lead wire in the predetermined region of the main body may be provided to insert the lead wire into the accommodation part and thereby to weld the lead wire to the main body. Thus, the bonding area between the main body and the lead wire may increase to improve the coupling force between the main body and the lead wire. Also, according to the embodiments of the present invention, the photosensitive paste containing platinum may be applied and then exposed and developed to form the resistance layer in the main body. Thus, the line width and distance of the resistance layer may be reduced to increase the resistance of the resistance layer, and also, the manufacturing process may be simplified to reduce the manufacturing costs. Also, the resistance adjustment part may be provided to be electrically connected to the resistance layer, and the resistance trimming part may be provided to be connected to the resistance adjustment part. Then, the laser may be irradiated onto the trimming pattern of the resistance trimming part according to the resistance to adjust the connection length between the resistance adjustment part and the resistance trimming part, thereby adjusting the resistance after the manufacturing process is completed.

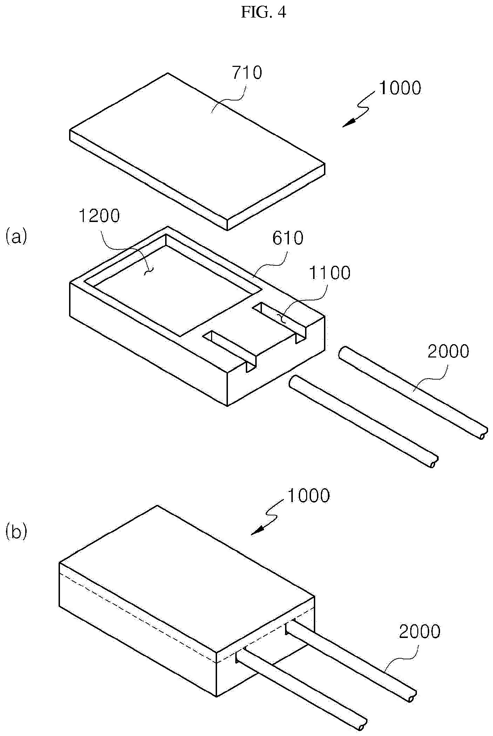

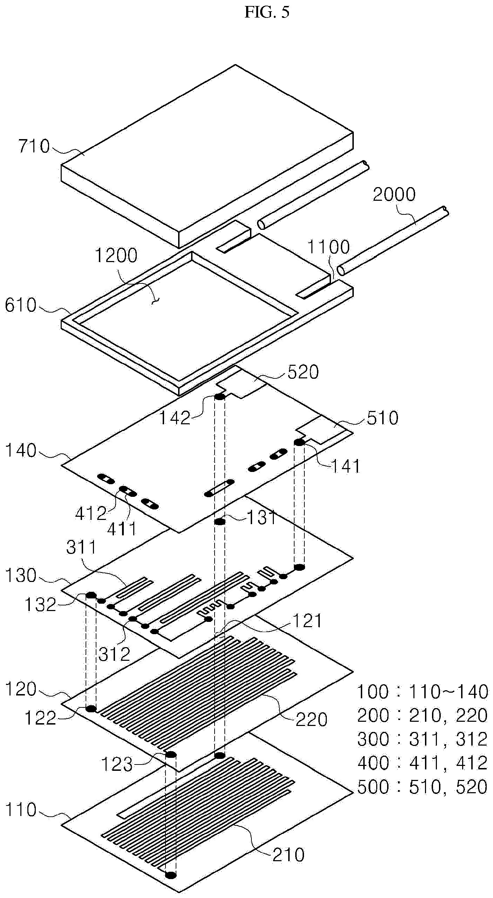

According to the first embodiment of the present invention, the cover layer 600 for protecting the platinum layer and the cover 700 provided to cover the cover layer 600 and the lead wire 2000 may be separately formed by using the glass for the high temperature. As a result, the number of processes may increase, and also, the manufacturing costs may increase. Thus, since the plurality of insulation layers 100, on which the resistance part 200 and the resistance trimming part 300 are disposed, and the cover layer 600 are made of the same material, the number of processes and the manufacturing costs may be reduced. A second embodiment for realizing the above-described objects will be described with reference to FIGS. 4 and 5.

FIG. 4 is a perspective view of a temperature sensor according to a second embodiment of the present invention, and FIG. 5 is an exploded perspective view of the temperature sensor according to the second embodiment of the present invention.

Referring to FIGS. 4 and 5, a temperature sensor may include a plurality of laminated insulation layers 100 (110 to 140), a resistance part 200 disposed on at least one insulation layer 110 and 120, a resistance adjustment part 300 disposed on at least one insulation layer 130 above the resistance part 200, a resistance trimming part 400 disposed on at least one insulation layer 140 above the resistance adjustment part 300, and a first cover 610 disposed on the resistance trimming part 400. Also, the temperature sensor may further include a second cover 710 disposed on the first cover and also may further include a lower cover (not shown) disposed below the uppermost insulation layer 110. FIG. 4(a) is a perspective view of the temperature sensor in a state in which the second cover 710 is not provided, and FIG. 4(b) is a perspective view of the temperature sensor in a state in which the second cover 710 is provided. Here, the insulation layer 100, the resistance part 200, the resistance adjustment part 300, the resistance trimming part 400, and the internal pad 500 may be the same as those according to the first embodiment, and thus, their detailed descriptions will be omitted.

The first cover 610 may be disposed on a fourth insulation layer 140. The first cover 610 may be provided to protect the resistance part 200, the resistance adjustment part 300, and the resistance trimming part 400, which are respectively disposed on the plurality of insulation layers 100. An accommodation part 1100 may be provided in the first cover 610. That is, one area of the first cover 610 may be removed to expose the internal pad 500 and provide the accommodation part 1100. Then, a lead wire 2000 may be seated in the accommodation part 1100. The external pad (not shown) may be disposed on the accommodation part 1100. The external pad may be disposed on a side surface of the accommodation part 1100 or disposed on an upper portion to contact the internal pad 500 exposed by the accommodation part 1100. Also, an exposure part 1200 through which at least a portion of the resistance trimming part 400 is exposed may be provided in the first cover 610. That is, the accommodation part 1100 which exposes the internal pad 500 and accommodates the lead wire 2000 and the exposure part 1200 exposing at least a portion of the resistance trimming part 400 may be provided in the first cover 610. The exposure part 1200 may be formed by removing a predetermined area of the first cover 610. For example, the exposure part 1200 may be formed by removing a central area of the first cover 610 to expose the resistance trimming part 400. Since the exposure part 1200 is provided in the first cover 610, entire resistance may be adjusted through the resistance trimming part 400 and the resistance adjustment part 300 after the first cover 610 is curved. That is, after the first cover 610 in which the exposure part 1200 for exposing a predetermined area of the resistance trimming part 400 is provided is curved, resistance of the temperature sensor may be measured. Here, when the measured resistance is less than set resistance, laser may be irradiated onto at least one of a plurality of trimming patterns 411 of the resistance trimming part 400 through the exposure part 1200. The laser may be irradiated onto at least one trimming pattern 411 so that the at least one dummy pattern 311 of the resistance adjustment part 300 is connected by a longer path to adjust resistance. The exposure part 1200 may not be provided in the first cover 610. When the exposure part 1200 is not provided in the first cover 610, the entire resistance may be adjusted by using the resistance trimming part 400 to cover the first cover 610. Here, the first cover 610 may be made of the same material as the insulation layer 100. For example, the first cover 610 may be made of a ceramic material including Al₂O₃. Also, the first cover 610 may have a thickness greater than that of each of the insulation layers 100 or equal to or less than the total thickness of the plurality of insulation layers 100. Alternatively, the first cover 610 may have a thickness greater than the total thickness of the plurality of insulation layers 100. Also, the first cover 610 may have a size less than that of each of the plurality of insulation layers 100. That is, the first cover 610 may have a short side having the same length as a short side of the insulation layer 100 and a long side having a length greater than that of a long side of the insulation layer 100. Here, in the first cover 610, one side, in which the accommodation part 1100 is provided, may be laminated to match one side of the insulation layer 100, and the other side, in which the accommodation part 1100 is provided, may be stepped with respect to the other side of the insulation layer 100. Thus, the lead wire 2000 may be accommodated through the accommodation part 1100 of the first cover 610 to come into contact with the internal pad 500 of the insulation layer 100 and then be supported to the insulation layer 100.

The second cover 710 is disposed on the first cover 610. That is, the second cover 710 may be provided to cover the first cover 610. Also, the second cover 710 may be provided in the first cover 610. Thus, the accommodation part 1100 and the exposure part 1200 may be covered by the second cover 710. Here, the second cover 710 may have the same thickness as the first cover and have a thickness different from that of the first cover 610. Also, the second cover 710 may be made of a material different from that of each of the insulation layer 100 and the first cover 610. For example, the second cover 710 may be made of a glass material for a high temperature. The second cover 710 may be disposed on an entire top surface of the first cover 610 or disposed on a portion of the top surface of the first cover 610. For example, the second cover 710 may be disposed to cover the first cover 610 or be disposed to cover each of the accommodation part 1100 and the exposure part 1200. When the second cover 710 is disposed to cover each of the accommodation part 1100 and the exposure part 1200, the first cover 610 may be exposed between the accommodation part 1100 and the exposure part 1200. However, when the second cover 710 cover the entire surface or the portion of the first cover 610, the second cover 710 may be formed through a single process. For example, the second cover 710 may be formed through a printing process using a mask that exposes each of the accommodation part 1100 and the exposure part 1200.

The above-described temperature sensor according to the second embodiment may be manufactured through a following method. First, the first and second insulation layers 110 and 120 on which the resistance part 200 is formed, the third insulation layer 130 on which the resistance adjustment part 300 is formed, the fourth insulation layer 140 on which the resistance trimming layer 400 and the internal pad 500 are formed, and the first cover on which the accommodation part 1100 and the exposure part 1200 are formed may be laminated and then sintered at the same time. Then, the temperature sensor may be measured in resistance, and the laser may be irradiated on at least one area of the resistance trimming layer 400 through the exposure part 1200 to adjust resistance. Then, the lead wire 2000 may be inserted and accommodated into the accommodation part 1100 to form the second cover 710 on the first cover 610. Alternatively, the plurality of insulation layers 100 and the first cover 610 may be laminated to measure resistance. Then, the laser may be irradiated onto at least one area of the trimming layer 400 through the exposure part 1200 to adjust the resistance and simultaneously perform sintering. Thereafter, the lead wire 2000 may be accommodated into the accommodation part 1100 to from the second cover 710 on the first cover 610.

Also, in the temperature sensor according to the second embodiment of the present invention, the plurality of insulation layers 100 and the first cover layer 600 may be laminated and then sintered at the same time. Then, the second cover 700 may be formed on the lamination to reduce the number of processes and reduce the manufacturing costs.

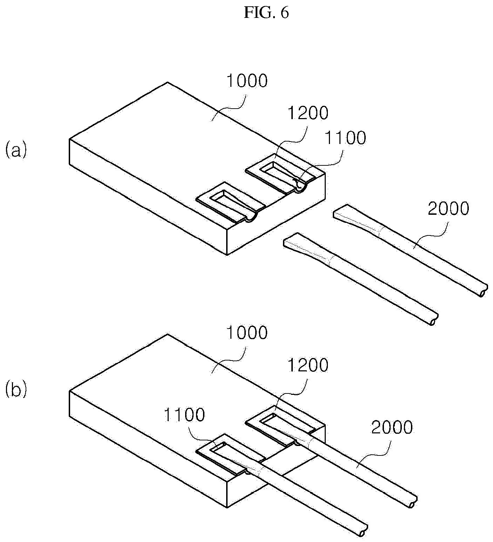

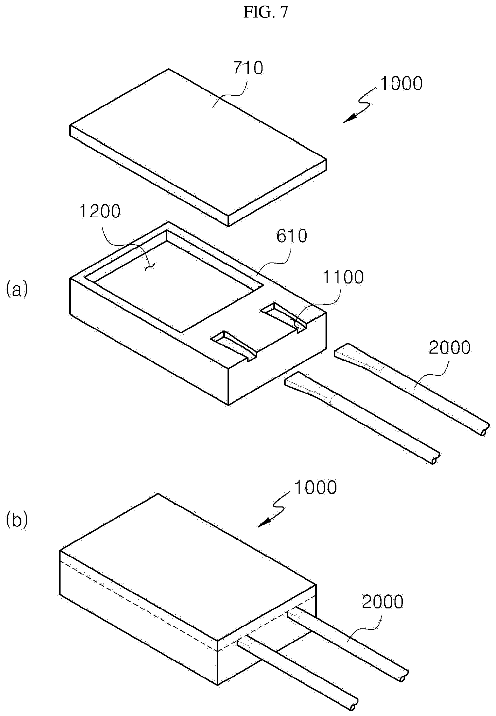

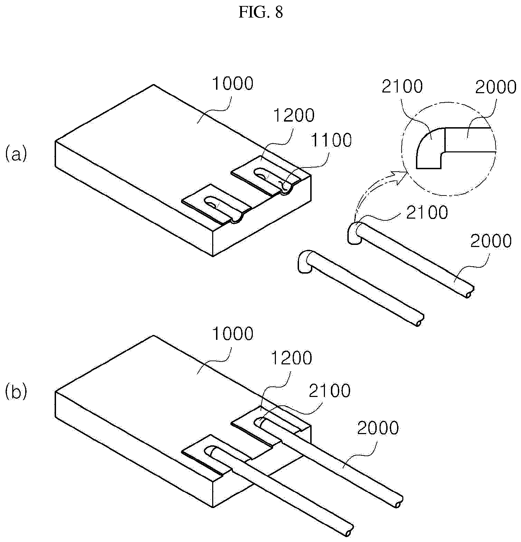

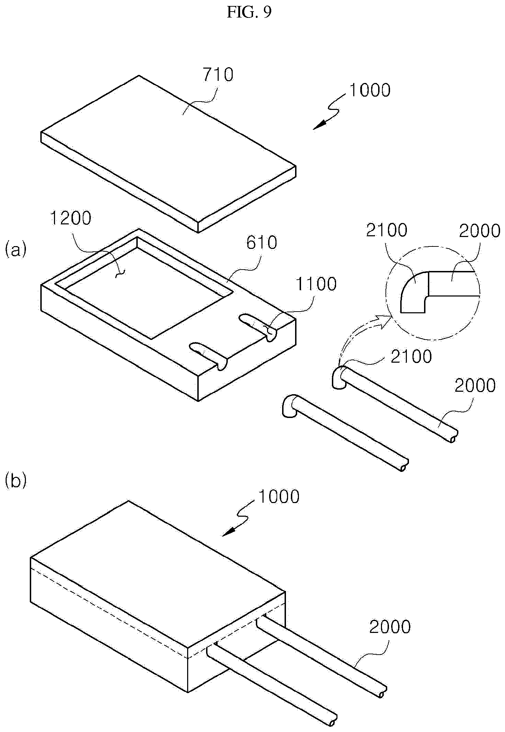

Also, the temperature sensor of the present invention may be deformed through various methods to improve the bonding force between the main body 1000 and the lead wire 2000. For example, according to third and fourth embodiments of the present invention, as illustrated in FIGS. 6 and 7, an end of the lead wire 200 may be pushed and spread, and thus, the accommodation part 1100 may be formed in the main body 1000 to correspond to the spread shape of the lead wire 2000. That is, the lead wire 2000 may increase in width from an edge area of the main body 1000 from which the accommodation part 1100 starts to an area to which the accommodation part 1100 is ended. The accommodation part 1100 may be expanded in a direction that is away from the short side corresponding to the accommodation part 1100. Also, according to fifth and sixth embodiments of the present invention, as illustrated in FIGS. 8 and 9, an insertion hole may be formed in the accommodation part 1100, and an end 2100 of the lead wire 2000 is bent to be inserted into the insertion hole.

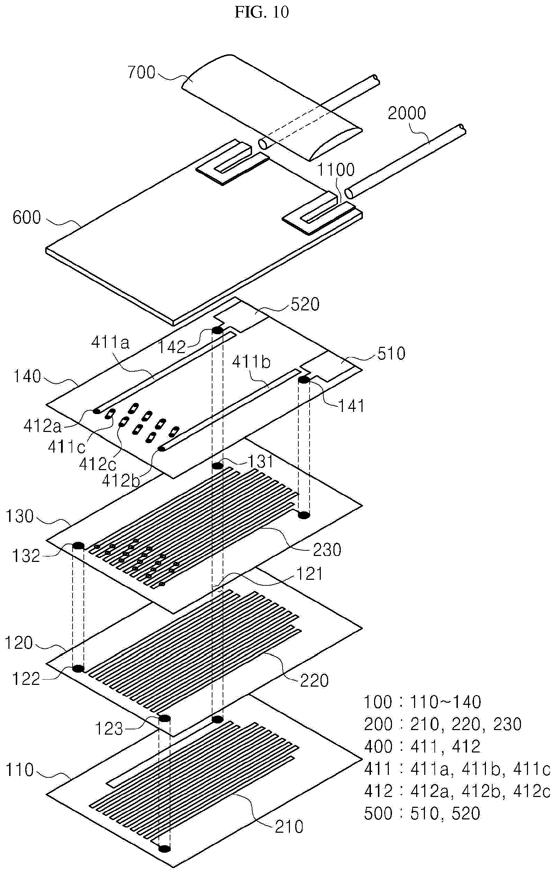

Also, the temperature sensor of the present invention may be variously manufactured as illustrated in FIGS. 10 to 15.

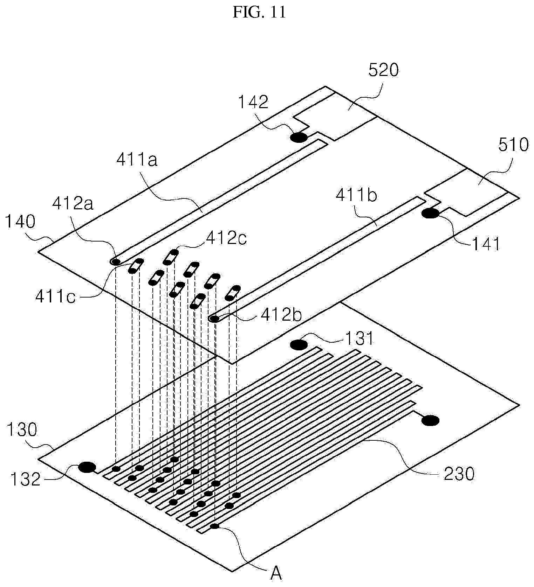

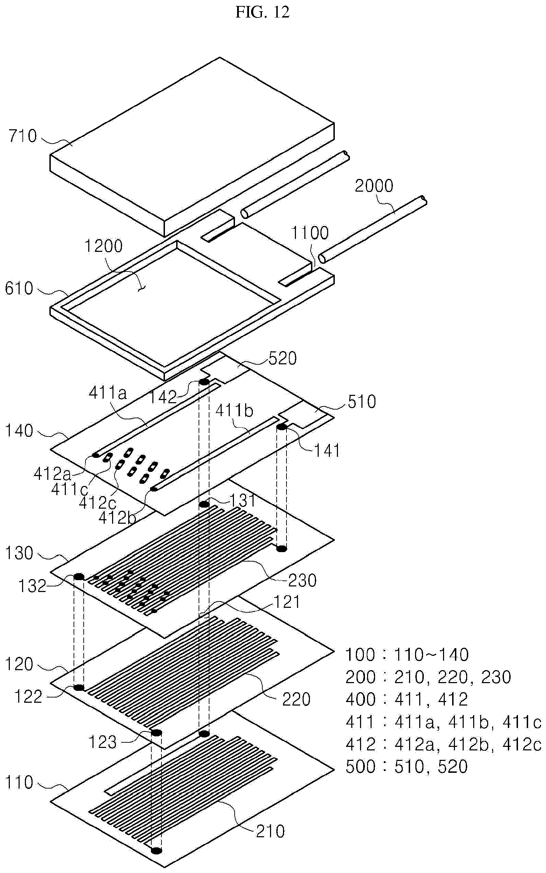

FIGS. 10 and 11 are an exploded perspective view and a partial enlarged view of a temperature sensor according to a seventh embodiment of the present invention. Also, FIG. 12 is an exploded perspective view of a temperature sensor according to an eighth embodiment of the present invention. Since constituents of FIGS. 10 and 12 are the same except for a cover layer 600 and a glass cover 700 of FIG. 10 and first and second covers 610 and 710 of FIG. 12, the embodiments will be described at the same time.

Referring to FIGS. 10 and 11, a temperature sensor according to a seventh embodiment of the present invention may include a plurality of insulation layers 100 (110 to 140), a resistance part 200 disposed on at least two insulation layers 100, a resistance trimming part 400 disposed on the resistance part 200, an internal pad 500, a cover 600, and a wire cover 700. Also, as illustrated in FIG. 12, a temperature sensor according to an eighth embodiment of the present invention may include a plurality of insulation layers 100 (110 to 140), a resistance part 200 disposed on at least two insulation layers 100, a resistance trimming part 400 disposed on at least one insulation layer 100 above the resistance part 200, an internal pad 500, a first cover 610, and a second cover 710. That is, the temperature sensor according to the seventh and eighth embodiments of the present invention may not separately include the resistance adjustment part when compared to the temperature sensor according to the first and second embodiments of the present invention. Hereinafter, differences between the seventh and eighth embodiments and the first and second embodiments will be mainly described.

The resistance part 200 may be disposed on each of the first to third insulation layers 110 to 130. That is, the resistance part 200 may include first to third resistance layers 210, 220, and 230 that are respectivley disposed on the first to third insulation layers 110, 120, and 130, which are laminated upward. Also, the resistance layers 210, 220, and 230 may be connected to each other. For example, the first resistance layer 210 may be connected to the second resistance layer 220 through an opening 123 which is defined in the second insulation layer 120 and filled with a conductive material. The second resistance layer 220 may be connected to the third resistance layer 230 through an opening 132 which is defined in the third resistance layer 130 and filled with a conductive material. Also, the resistance part 200 may be connected to the internal pad 500 through the opening. For example, the first internal pad 510 may be connected to the third resistance layer 230 through an opening 141, which is defined in the fourth insulation layer 140 and filled with a conductive material, and the second internal pad 520 may be connected to the first resistance layer 210 through an opening 142, which is defined in the fourth insulation layer 140 and filled with a conductive material, and openings 131 and 121, which are respectively defined in the third and second insulation layers 130 and 120 and filled with a conductive material.

The resistance trimming part 400 may be disposed on the fourth insulation layer 140. The resistance trimming part 400 may include a plurality of trimming patterns 411 (411a, 411b, and 411c) having at least two lengths and a plurality of openings 412 (412a, 412b, and 412c) filled with a conductive material. Here, the trimming patterns 411a and 411b may be spaced apart from a long side of the fourth insulation layer 140 and have predetermined lengths along the long side. That is, the trimming patterns 411a and 411b may be connected to the internal pad 500 and spaced apart from the openings 141 and 142 and thus may have a predetermined length between the openings 141 and 142. Also, the openings 412a and 412b connected to a predetermined area of the lower third resistance layer 230 are defined in ends of the trimming patterns 411a and 411b, respectively. The trimming pattern 411c may be provided in plurality between the two dummy patterns 411a and 411b, which are spaced part from each other. For example, the trimming pattern 411c may be formed at an angle of 45° from an edge between one short side and one long side. Here, the trimming pattern 411c may be disposed to connect two openings 412c to each other. Also, the trimming patterns 411a and 411b may be connected in series to the resistance part 200 through one opening 412a or 412b, and the plurality of trimming patterns 411c may be connected in parallel to the resistance part 200 through two openings 412c. That is, each of the trimming patterns 411a and 411b is connected to one resistance pattern, and the trimming pattern 411c is connected to two resistance patterns. Here, a reference symbol A of FIG. 12 may refer to a plurality of areas of the resistance part 200 connected through the openings 412a, 412b, and 412c of the resistance trimming part 400. Thus, at least one of the trimming patterns 411 may be broken by using the laser to adjust entire resistance of the temperature sensor. When the dummy patterns 411a and 411b that are lengthily disposed in the direction of the long side connected in series to the resistance part 200 are broken, the temperature sensor may decrease in resistance, and when the trimming pattern 411c connected in parallel to the resistance part 200 is broken, the temperature sensor may increase in resistance.

As described above, in the temperature sensor according to the seventh and eighth embodiments of the present invention, the resistance adjustment part may not be separately provided, the trimming pattern 411 of the resistance trimming part 400 may be connected to the resistance part 200 through the opening 412, and at least one of the trimming patterns 411 may be cut by using the laser. Also, the trimming pattern 411 may be connected in series to the resistance part 200 or connected in parallel to the resistance part 200. Thus, the trimming pattern 411 may be cut to increase or decrease the resistance of the temperature sensor.

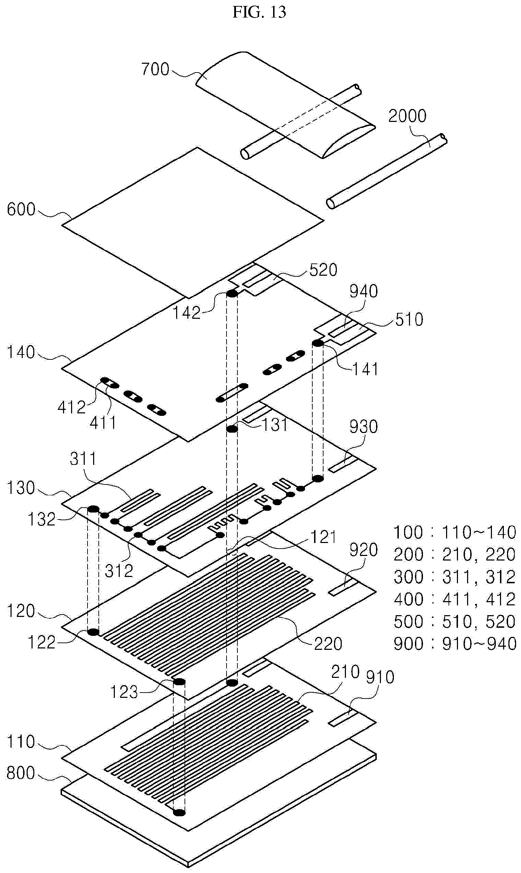

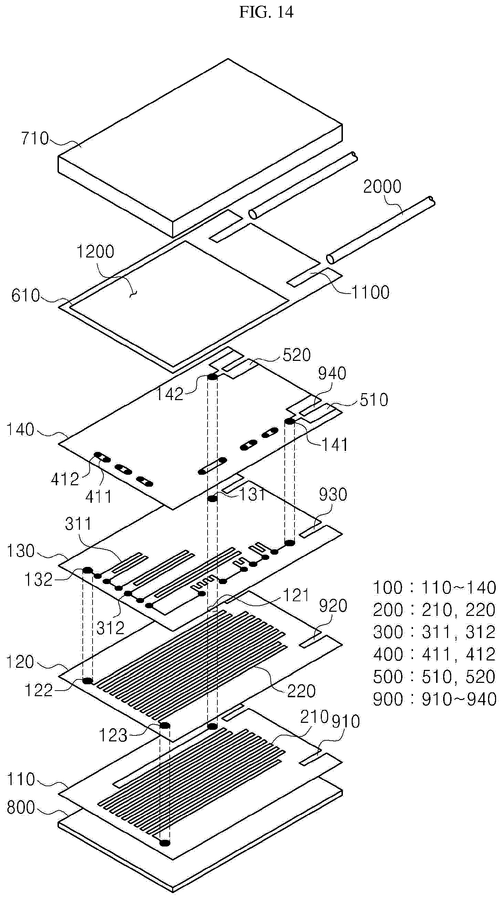

Also, FIG. 13 is an exploded perspective view of a temperature sensor according to a ninth embodiment of the present invention. Also, FIG. 14 is an exploded perspective view of a temperature sensor according to a tenth embodiment of the present invention. Here, since constituents of FIGS. 13 and 14 are the same except for a cover layer 600 and a glass cover 700 of FIG. 13 and first and second covers 610 and 710 of FIG. 14, the embodiments will be described at the same time.

Referring to FIG. 13, a temperature sensor according to a ninth embodiment of the present invention may include a plurality of insulation layers 100 (110 to 140), a resistance part 200 disposed on at least one insulation layer 100, a resistance adjustment part 300 disposed on at least one insulation layer 100 above the resistance part 200, a resistance trimming part 400 disposed on at least one insulation layer 100 above the resistance adjustment part 300, a cover 600 disposed on the resistance trimming part 400, a lead wire 2000, and a wire cover 700 covering the lead wire 2000. Also, as illustrated in FIG. 14, the temperature sensor may include a first cover 610 disposed on the resistance trimming part 400, the lead wire 200, and a second cover 710 disposed to cover the first cover 610 and the lead wire 2000. Also, the temperature sensor may further include a lower cover 800 disposed on a lower portion of the lowermost insulation layer 100. Here, since the lower cover 800 is formed by laminating a plurality of sheets, each of which is made of the same material as the insulation layer 100, the lower cover 800 may have a thickness greater than that of each of the insulation layers 100. Also, in the temperature sensor according to the fifth embodiment of the present invention, a cutout part 900 may be provided in each of the plurality of insulation layers 100. That is, cutout parts 910 to 940 may be provided in the first to fourth insulation layers 110 to 140, respectively. The cutout part 900 may have the same width as the accommodation part 1100 or may have widths that increases or decreases according to the layers. That is, the cutout parts 900 may be provided in the plurality of insulation layers 100 and thus be used as the accommodation parts 1100. The internal pad 500 may be disposed to cover the cutout part 940. Thus, the cutout part 900 may come into contact with the internal pad 500 to accommodate the lead wire 2000. Also, since the cutout part 900 is provided in each of the plurality of insulation layers 100 to accommodate the lead wire 2000, the first cover 600 may have a thin thickness. For example, the first cover 600 may have the same thickness as that of each of the plurality of insulation layers 100.

The cutout part 900 may be formed in, for example, a rectangular hole pattern in a mass production process and be cut in one direction. That is, a rectangular hole may be formed in a predetermined area of a sheet, for example, a boundary area between unit sensors, and then, when the sheet is cut by a sensor unit after the pattern formation process, the lamination process, and the like, a central portion of the rectangular hole may be cut to form the cutout part 900 having a slit shape.

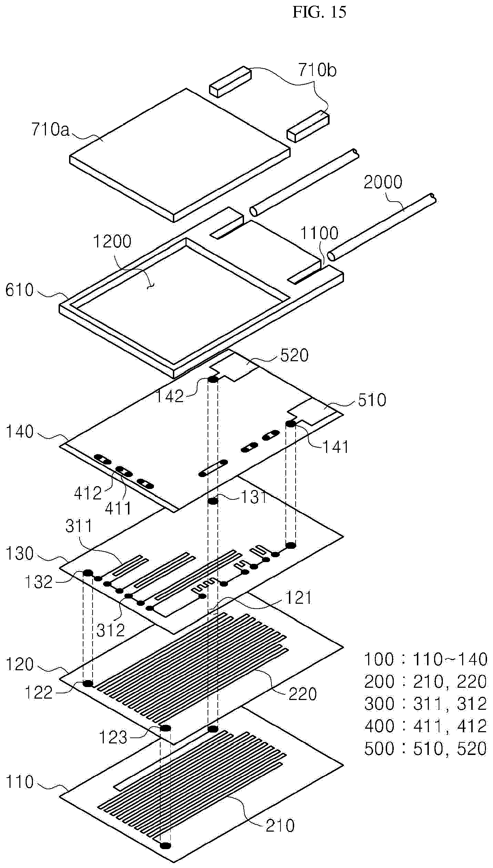

According to the abovementioned embodiments of the present invention, the second cover 710 may be disposed on the first cover 610. However, the second cover 710 may be disposed on only a portion of the first cover 610. For example, as illustrated in FIG. 15, the second cover 710 may be disposed on only the accommodation part 1100 and the exposure part 1200 of the first cover 610. That is, the second cover 710 may include a second-a cover 810a disposed on the accommodation part 1100 and a second-b cover 710b disposed on the exposure part 1200. Here, the second-a cover 710a and the second-b cover 710b may be provided to be buried into the accommodation part 1100 and the exposure part 1200, respectively. Here, the second cover 710 may have the same thickness as the first cover 610 and be disposed on the same plane as the first cover 610. Alternatively, the second cover 710 may be a thickness different from that of the first cover 610 and be stepped with respect to the first cover 610. That is, each of the second-a cover 710a and the second-b cover 710b may have the same thickness as the first cover 610 and be buried into the accommodation part 1100 and the exposure part 1200 to form the same plane as the first cover 610. Also, each of the second-a cover 710a and the second-b cover 710b may have a thickness greater or less than that of the first cover 610 and thus may protrude from the plane of the first cover 610 or be recessed from the plane of the first cover 610.

As described above, the technical idea of the present invention has been specifically described with respect to the above embodiments, but it should be noted that the foregoing embodiments are provided only for illustration while not limiting the present invention. Various embodiments may be provided to allow those skilled in the art to understand the scope of the preset invention, but the present invention is not limited thereto.

## Claims

1. A temperature sensor comprising:
a main body in which a resistance part is provided;
a lead wire bonded to the main body; and
an accommodation part having a predetermined depth in a bonded area between the main body and the lead wire to accommodate the lead wire so as to come into contact with the lead wire.

2. The temperature sensor of claim 1, wherein the lead wire has an end that is spread.

3. The temperature sensor of claim 1, wherein an insertion hole is defined in at least a portion of the accommodation part, and an end of the lead wire is bent to be inserted into the insertion hole.

4. The temperature sensor of claim 1, wherein the main body comprises:
a plurality of laminated insulation layers;
the resistance part disposed on at least one of the insulation layers; and
a resistance trimming part disposed on the at least one insulation layer above the resistance part to trim entire resistance.

5. The temperature sensor of claim 4, wherein the resistance part comprises at least one resistance layer disposed on at least one insulation layer so that the resistance layers are connected to each other through at least one first opening filled with a conductive material, and
the resistance trimming part comprises at least one trimming pattern and at least one second opening filled with a conductive material and is connected to at least one resistance layer of the resistance layers through the second opening, wherein the at least one trimming pattern is cut to trim the resistance.

6. The temperature sensor of claim 5, further comprising a resistance adjustment part disposed on the insulation layer to connect the resistance part to the resistance trimming part and thereby to adjust the resistance.

7. The temperature sensor of claim 6, wherein the resistance adjustment part comprises at least one dummy pattern and at least one contact area so that the dummy pattern is connected to the trimming pattern through the contact area and the second opening.

8. The temperature sensor of claim 1, wherein photosensitive paste containing platinum is provided on an insulation layer and patterned through exposure and development processes to form the resistance part.

9. The temperature sensor of claim 8, wherein, in the photosensitive paste containing the platinum, the platinum and an organic material containing a photosensitive material has a ratio of 50:50 to 90:10.

10. The temperature sensor of claim 7, wherein photosensitive paste containing platinum is provided on the insulation layer and patterned through exposure and development processes to form at least one of the dummy pattern and the trimming pattern.

11. The temperature sensor of claim 1, further comprising a cover disposed to cover the main body and a wire cover disposed to cover the lead wire.

12. The temperature sensor of claim 1, further comprising a first cover disposed on the main body to expose at least a portion of the main body and a second cover disposed to cover the first cover.

13. A temperature sensor comprising:
a plurality of laminated insulation layers;
a resistance part disposed on at least one of the insulation layers;
a resistance trimming part disposed on the at least one insulation layer above the resistance part and connected to the resistance part to trim resistance;
a first cover disposed on the resistance trimming part to expose at least a portion of the resistance trimming part; and
a second cover disposed on the first cover.

14. The temperature sensor of claim 13, further comprising an accommodation part provided in a predetermined area of the first cover and a lead wire accommodated in the accommodation part.

15. The temperature sensor of claim 13 or 14, wherein the resistance part comprises at least one resistance layer disposed on at least one insulation layer so that the resistance layers are connected to each other through at least one first opening filled with a conductive material, and
the resistance trimming part comprises at least one trimming pattern and at least one second opening filled with a conductive material and is connected to at least one resistance layer of the resistance layers through the second opening, wherein the at least one trimming pattern is cut to trim the resistance.

16. The temperature sensor of claim 15, further comprising a resistance adjustment part disposed on the insulation layer to connect the resistance part to the resistance trimming part and thereby to adjust the resistance.

17. The temperature sensor of claim 16, wherein the resistance adjustment part comprises at least one dummy pattern and at least one contact area so that the dummy pattern is connected to the trimming pattern through the contact area and the second opening.

18. The temperature sensor of claim 14, wherein the second cover is disposed to be buried into an exposure part and the accommodation part of the first cover.

19. The temperature sensor of claim 13, wherein the first cover is made of the same material as each of the plurality of insulation layers, and the second cover is made of a material different from that of each of the plurality of insulation layers.

20. The temperature sensor of claim 19, wherein each of the plurality of insulation layers and the first cover is made of a material comprising Al₂O₃.

21. The temperature sensor of claim 19, wherein the second cover is made of a material comprising glass.

22. The temperature sensor of claim 13, wherein laser is irradiated onto at least a portion of the resistance trimming layer exposed by the first cover to adjust resistance.

23. The temperature sensor of claim 13, wherein the first cover has a thickness greater than that of each of the plurality of insulation layers and equal to or different from that of the plurality of laminated insulation layers.

24. The temperature sensor of claim 23, wherein the second cover has a thickness equal to or different from that of the first cover.

25. The temperature sensor of claim 14, wherein the second cover is provided in plurality, and the plurality of second covers are spaced a predetermined distance from each other and respectively provided in an exposure part, which exposes the resistance trimming part, and the accommodation part of the first cover.
